# EUROPEAN PATENT APPLICATION

(11) **EP 0 901 280 A2**
(43) Date of publication of application: **10.03.1999**
(21) Application number: 98306922.0
(22) Date of filing: 28.08.1998
(51) Int. Cl.: H04N 5/232

(54) **Apparatus and method for digital photography**

(30) Priority: 03.09.1997 IL 12169797
(71) Applicant: Scitex Corporation Ltd., Herzliya 46104 (IL)
(72) Inventor: Ben Shoshan, Joseph, RA'anana 43729 (IL); Schori, Avraham, Kochav Yair 44864 (IL)
(74) Representative: Freed, Arthur Woolf

(57) **Abstract**

A system and method for digital photography which enables the photographer to accurately position the object or objects to be photographed in accordance with the instructions received from the designer is provided. The method for digital photography utilizes a digital camera operating in a preview mode and a stills mode,. The method includes providing a reference image which provides the position of at least one object to be photographed by the digital camera, operating the digital camera in its preview mode so as to capture a preview image of the object, providing a superimposed image of the object and the reference image, aligning the position of the object with the reference image while monitoring the superimposed image, switching from the preview mode to the stills mode once such alignment has been achieved and acquiring an image of the image in the stills mode.

## Description

### FIELD OF THE INVENTION

The present invention relates to digital photography generally and more particularly to digital photography utilizing digital cameras having a preview mode and a picture mode.

### BACKGROUND OF THE INVENTION

Digital cameras which include a camera with a digital instead of a conventional film back and a computer with a display are usually used for professional photography applications. As such, the photographer often receives instructions how to position the object or objects to be photographed so as to match the designer idea as to the final presentation of the photographed objects in a publication, for example, a sales catalog.

One of the problems the photographer faces is to accurately position these objects in accordance with the designers instructions.

### SUMMARY OF THE INVENTION

The present invention provides a system and method for digital photography which enables the photographer to accurately position the object or objects to be photographed in accordance with the instructions received from the designer.

In an embodiment of the invention, the digital camera includes a preview mode, preferably but not necessarily a video mode, and a picture or stills mode for the final photograph. Preferably, but not necessarily, the video mode is a slow video mode (e.g. few frames per second rather than normal video mode which is 30 frames per second) which provides a relatively low resolution image of the objects and the stills mode is a relatively high resolution mode suitable for high quality photography.

The method of the present invention preferably includes the following steps. In the first step a reference image of the designer instructions regarding the positioning of the object or objects (hereinafter referred to as objects) is provided. In a second step, which may be performed after the first one or before the first one, the objects are roughly positioned in their place. In the next step the digital camera provides an image in its preview mode on a display of a computer to which the camera is connected of the objects to be photographed which is superimposed on the reference image. Thereafter the photographer moves the objects or the camera, or changes the focal length of the camera lens, so that they match in their position on the display with that of the objects of the reference image, whereby a match in position with that intended by the designer is achieved.

### BRIEF DESCRIPTION OF THE DRAWINGS

The invention is herein described, by way of example only, with reference to the accompanying drawings, wherein:
Fig. 1 is a schematic block diagram of the method of the present invention;
Fig. 2 is an exemplary illustration of an analog reference image prepared by the designer in accordance with one embodiment of the invention;
Fig. 3 is a schematic display of the analog reference image of Fig. 2 after it has been photographed;
Fig. 4 is an image of the objects to be photographed before accurate positioning;
Fig. 5 is a display of the superimposed image before accurate positioning;
Fig. 6 is a display of the superimposed image after accurate positioning; and

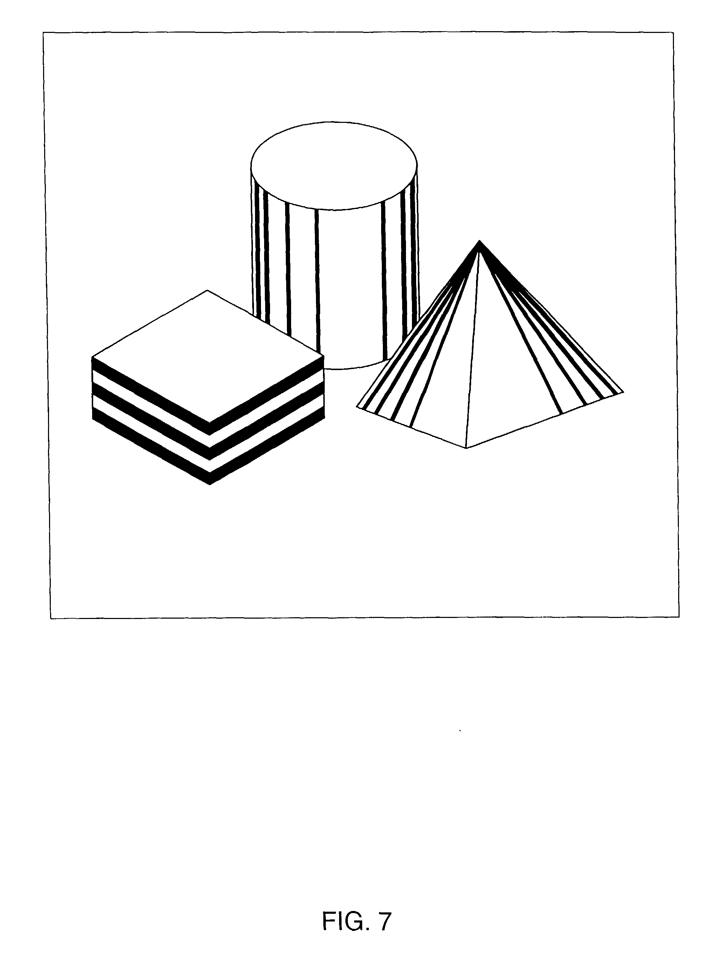

Fig. 7 is a display of the final high resolution photograph captured by the camera in its stills mode.

### DETAILED DESCRIPTION OF THE INVENTION

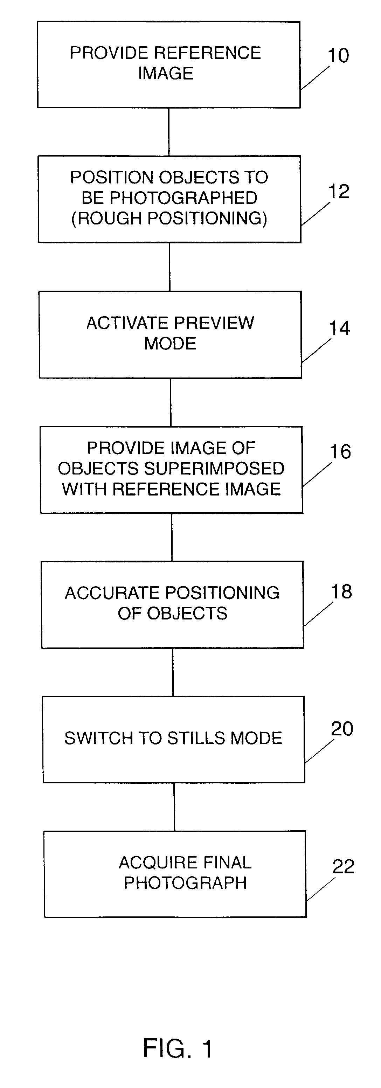

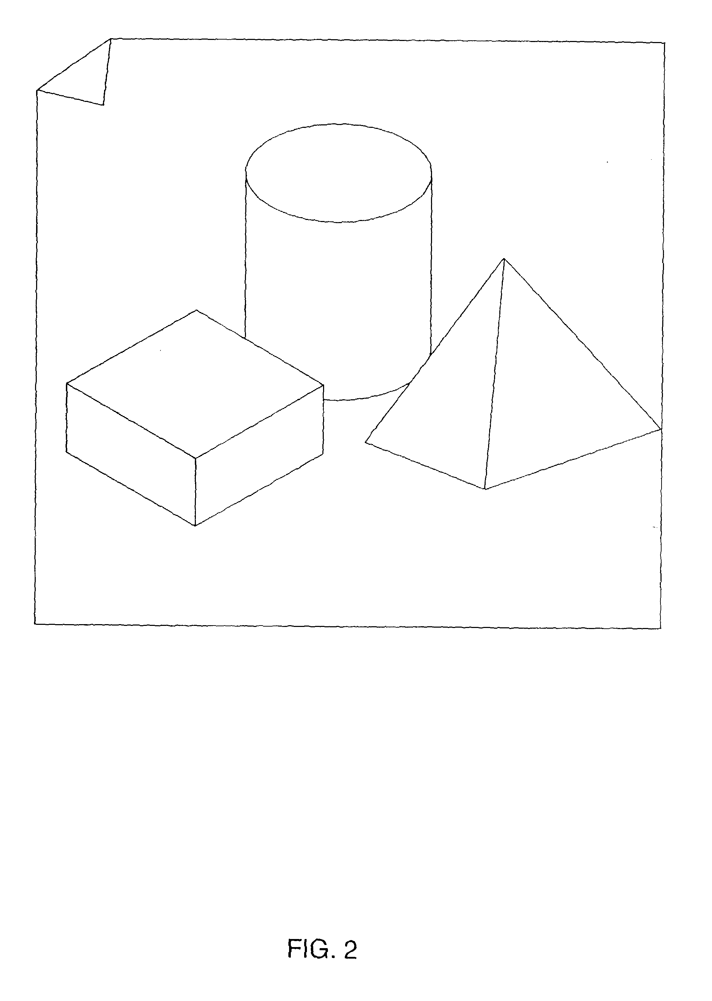

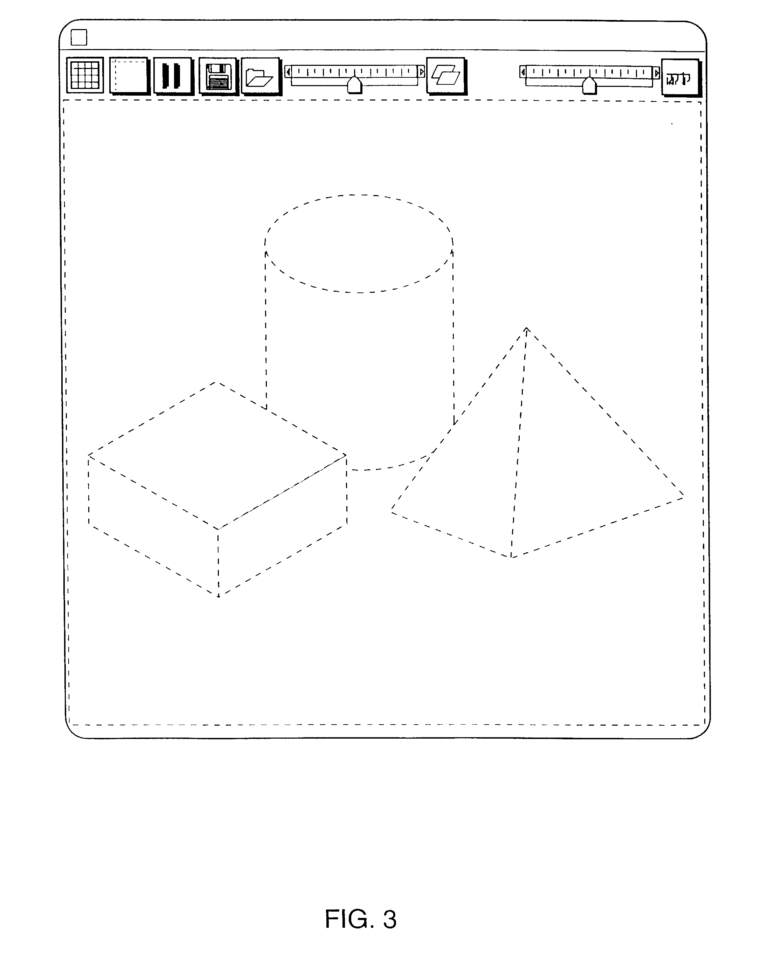

Reference is now made to Fig. 1 which is a schematic block diagram of the digital photography method of the present invention. The method of Fig. 1 can be employed for example with the Scitex Leaf DCBII Live digital camera, commercially available from Scitex Corporation Ltd. of Herzlia, Israel. The method of the present invention preferably includes the following steps. In step 10, a reference image of the designer instructions regarding the positioning of the objects is provided. It will be appreciated that the reference image may be provided as an analog image as illustrated in Fig. 2. In this case, the reference image should be photographed by the camera, as illustrated in Fig. 3, so as to convert it to a digital file which may be used for displaying it on the digital camera computer monitor or as a digital file created by the designer with any suitable image editing application or electronic scanning and submitted in any electronic communication means.

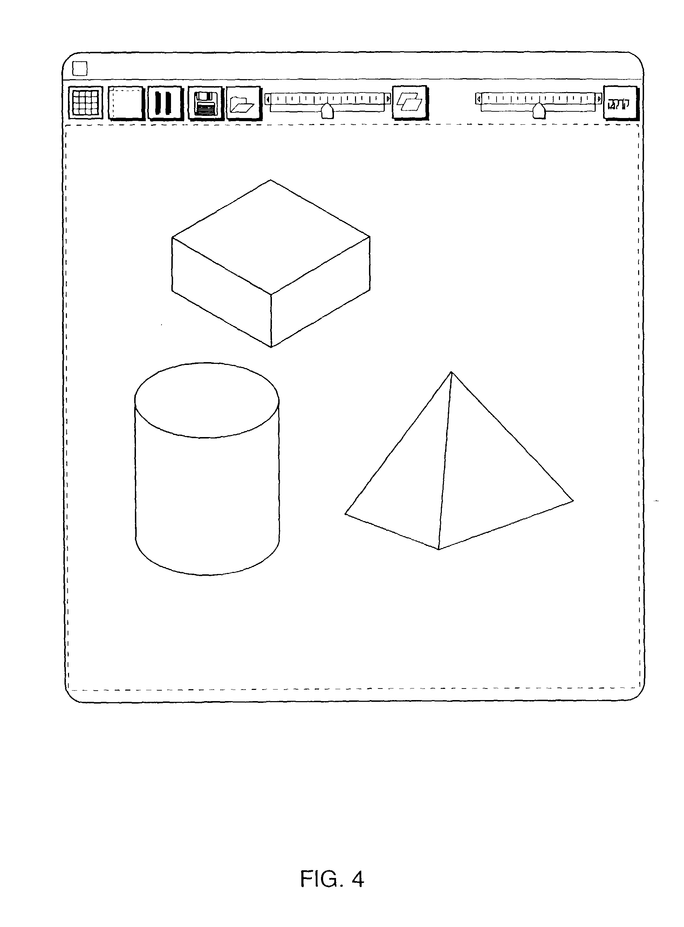

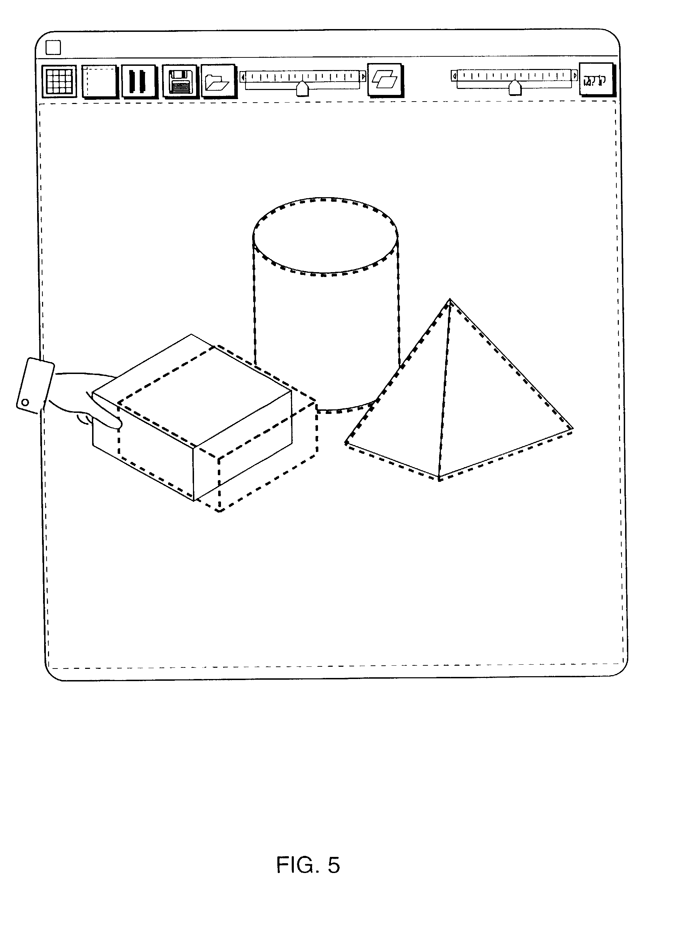

In step 12, the objects are roughly positioned in their place as illustrated by Fig. 4. Step 12 may alternatively be carried out before step 10. In the next step 14, the preview mode of the digital camera is activated. In the preferred embodiment, the preview mode is the slow video mode (4 frames per seconds) of the above mentioned Scitex Leaf DCBII Live digital camera. The digital camera provides an image in its preview mode on a display of its computer to which the camera is connected. In step 16, the image displayed is that of both the objects and the reference image superimposed as illustrated in Fig. 5

An iterative process in which the photographer or an assistant moves the objects or the camera or changes the focal length of the lens in order to accurately position the objects, i.e. to match them to the reference image then takes place (step 18) while reviewing the results on the monitor. Since the camera is operating in the video preview mode this is a substantial real time process.

It will be appreciated that all the features of the digital camera may be employed for facilitating the positioning process, one non-limiting example being to change (increase or decrease) the size of the reference image on the display in order to match it to the size of the objects. Another non-limiting example is to use the ghosting level of the camera, i.e. the appearance of the reference image so as to provide better contrast between the image of the objects and the reference image.

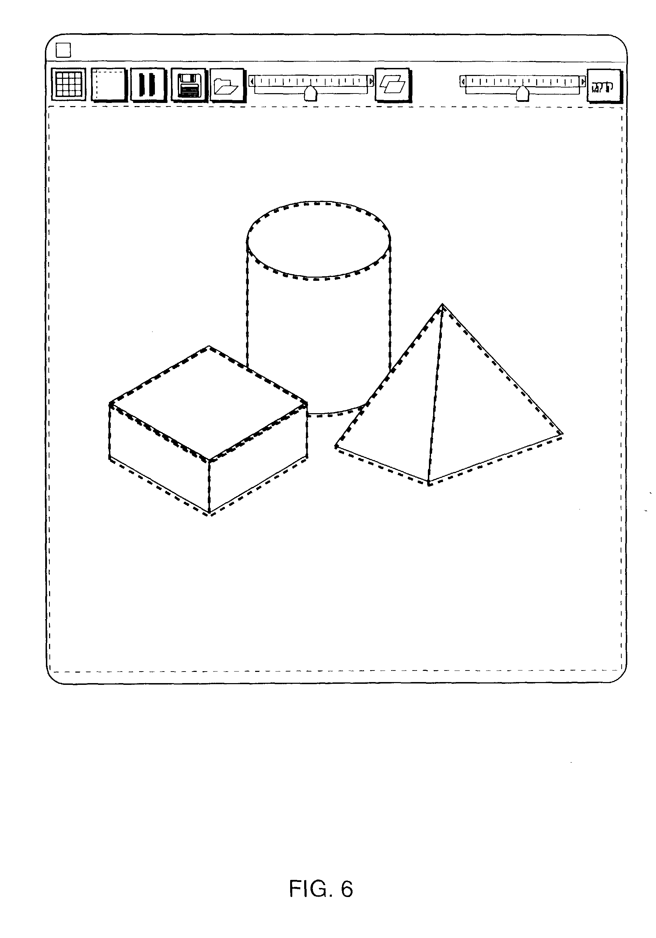

Once a match is achieved as shown in Fig. 6, the camera is switched from its preview video mode to its still final mode (step 20) and a final photograph is acquired in the stills mode

It will be appreciated by those skilled in the art that, while the system and method of the present invention were disclosed as adapted to a digital camera having a video preview mode, other preferred embodiments of the present invention may be adapted for performing the method of the present invention with other preview modes.

While the invention has been described with respect to a limited number of embodiments, it will be appreciated that many variations, modifications and other applications of the invention may be made.

## Claims

1. A method for digital photography utilizing a digital camera operating in a preview mode and a stills mode, the method comprising the steps of:
providing a reference image which provides the position of at least one object to be photographed by said digital camera;
operating said digital camera in its preview mode so as to capture a preview image of said at least one object;
providing a superimposed image of said at least one object and said reference image;
aligning the position of said at least one object with said reference image while monitoring said superimposed image;
switching from said preview mode to said stills mode once such alignment has been achieved; and
acquiring an image of said at least one image in said stills mode.

2. A method according to claim 1 wherein said aligning step comprises the step of performing at least one of the following steps:
moving said at least one object;
moving said digital camera; or
changing the focal length of the lens of said digital camera.

3. A method according to claim 1 wherein said reference image is an analog image wherein said method also includes the step of acquiring an image of said analog image so as to provide said reference image.

4. A method according to claim 2 wherein said reference image is an analog image wherein said method also includes the step of acquiring an image of said analog image so as to provide said reference image.

5. A method according to claim 1 wherein said reference image is a digital image.

6. A method according to any claim 1 wherein said preview mode is a video mode.

7. A method according to claim 6 wherein said video mode is a slow video mode.

8. A method according to claim 1 also comprising the step of utilizing said digital camera for increasing the contrast between said reference image and said at least one object.

9. A method according to claim 1 also comprising the step of changing the size of said reference image in order to match it with the size of said at least one object.
